# FASCICULE DE BREVET EUROPEEN

(11) **EP 3 080 877 B1**
(45) Date de publication et mention de la délivrance du brevet: **29.11.2017**
(21) Numéro de dépôt: 14812459.7
(22) Date de dépôt: 12.12.2014
(51) Int. Cl.: H01R 13/58, H02G 15/007, H02G 15/013

(54) **CONNECTEUR ELECTRIQUE MUNI D'UN DISPOSITIF DE SERRAGE DE CABLE**
ELEKTRISCHER VERBINDER MIT EINER KABELKLEMMVORRICHTUNG
ELECTRICAL CONNECTOR PROVIDED WITH A CABLE CLAMPING DEVICE

(30) Priorité: 12.12.2013 FR 1362486
(43) Date de publication de la demande: 19.10.2016
(73) Titulaire: Delphi International Operations Luxembourg S.à r.l., 4940 Bascharage (LU)
(72) Inventeur: CASSES, Claude, F-28300 Clévilliers (FR)
(74) Mandataire: Delphi France SAS
(86) Numéro de dépôt international: PCT/EP2014/077555
(87) Numéro de publication internationale: WO 2015/086817

(56) Documents cités:
- EP-A2- 1 037 325
- DE-B- 1 061 861
- GB-A- 1 031 777
- GB-A- 2 180 106

## Description

L'invention concerne le domaine de la connectique électrique, par exemple des connecteurs électriques de puissance et, notamment, les connecteurs électriques de puissance pour véhicules automobiles hybrides.

Les connecteurs électriques de puissance sont utilisés dans les véhicules automobiles électriques ou hybrides par exemple pour interconnecter un ensemble de batteries à un moteur électrique, à un convertisseur de puissance, etc.

Dans les véhicules hybrides, le moteur thermique génère des vibrations qui se transmettent aux câbles de puissance et donc également aux connecteurs et à leur contacts. La section des câbles de puissance étant relativement grande (par exemple de 40 ou 50mm²), ceux-ci sont rigides et présentent une inertie importante. Le niveau de ces vibrations peut alors atteindre 15G, 25G voire 40G selon le lieu où se trouvent les câbles et les connecteurs. Avec de tels niveaux de vibration, les points de contact électrique entre les contacts électriques des connecteurs peuvent s'user prématurément. Il en résulte un risque d'échauffement, voire d'incendie. Il est donc important de prévenir ce risque.

Le document EP-A-1037325 divulgue un connecteur électrique selon le préambule de la revendication 1. L'invention a pour objet un connecteur électrique selon la revendication 1.

A cette fin, il est proposé un dispositif de fixation et de serrage de câble, notamment pour connecteur électrique, comprenant une douille, une bague de serrage et des moyens de verrouillage portés au moins en partie par la bague de serrage, permettant de bloquer le déplacement de la bague de serrage par rapport à la douille. Dans ce document, une douille constitue essentiellement un manchon creux, avec une paroi interne essentiellement cylindrique assurant le serrage et le blocage d'un ou plusieurs câbles, et une paroi externe également essentiellement cylindrique sur laquelle vient se placer une bague de serrage. La douille peut être constituée d'une ou plusieurs pièces (par exemple deux demi-douilles). L'une et/ou l'autre de ces pièces comporte(nt) une surface interne correspondant à au moins une portion sensiblement cylindrique (un demi-cylindre pour une demi-douille, par exemple). La douille peut-être située par exemple sur un connecteur ou sur tout autre dispositif comportant un ou plusieurs contacts à protéger des vibrations ou en amont de ceux-ci.

De nombreuses formes et configurations de douilles ou portions de douille, ainsi qu'un nombre varié de douilles peuvent être envisagés. Par exemple, on peut avoir deux demi-douilles complémentaires formant lorsqu'elles sont serrées sur le câble, un passage sensiblement cylindrique, avec un pourtour circulaire fermé ou presque. On peut avoir une portion de douille fixe et une portion de douille mobile autour d'un axe de rotation sur lequel elle est articulée. On peut également avoir deux demi-douilles mobiles autour de l'axe de rotation sur lequel ils sont chacun respectivement articulés. On peut également avoir plusieurs paires de demi-douilles, chaque paire bloquant respectivement un câble.

La douille et la bague de serrage comprennent toutes deux une ouverture (c'est-à-dire un passage) pour le passage d'un câble. La douille et la bague de serrage sont toutes deux des pièces en matière plastique, par exemple. Au moins l'un des éléments parmi la douille et la bague de serrage comporte une surface interne destinée à venir presser une surface externe du câble ou un élément rapporté sur celui-ci, tel- que, par exemple, une portion de gaine thermo-rétractable. Cette surface interne vient ainsi en contact avec le câble pour bloquer le câble, lorsque la bague de serrage est déplacée, par rapport à la douille, d'une position dans laquelle la bague de serrage est dégagée de la douille et un déplacement du câble est possible, vers une position dans laquelle le câble est bloqué. Cette surface interne peut être située par exemple sur une portion de douille (demi-douille par exemple) mobile portée par un flasque (autrement dit dans ce contexte, une collerette) articulé autour d'un axe de rotation. Si un même flasque porte une ou plusieurs portions de douille, chaque portion de douille mobile est alors articulée sur une bride autour d'un axe de rotation, entre une position desserrée, dans laquelle le câble peut être déplacé, et une position serrée, dans laquelle les portions de douille sont maintenues serrés sur le câble par la bague de serrage, lorsque celle-ci est manipulée pour serrer le câble dans le dispositif de serrage. Non seulement, une portion de douille mobile est articulée sur une bride, mais en outre elle peut être montée de manière amovible sur cette bride. Ainsi, le montage de contacts volumineux et d'un joint unitaire filaire est rendu possible, avant le montage des portions de douille et de leur flasque respectif. Chaque portion de douille mobile contribue alors au blocage du contact et du joint respectivement dans une cavité et une gorge prévues à cet effet.

Quand la douille mobile est en position serrée sur le câble, la surface interne est distante de l'axe de rotation d'un rayon supérieur à la distance la plus courte entre l'axe de rotation et la surface externe du câble. Autrement dit, lorsque la portion de douille mobile est en position serrée par la bague de serrage, le diamètre interne du passage du câble au niveau de la douille est inférieur au diamètre externe du câble et de sa gaine isolante externe. Ceci se produit grâce à un effet de bascule de la (ou des) portions de douille mobiles autour de l'axe de rotation qui permet de libérer ou d'obturer partiellement le passage du câble.

Il est important de considérer que le dispositif de serrage selon l'invention comporte peu d'éléments et que la bague de serrage est l'élément qui est directement manipulé par un opérateur pour être déplacée, par rapport à la douille, d'une position dans laquelle le câble n'est pas serré et peut encore être déplacé à travers le passage ménagé dans la bague de serrage et la douille, vers une position dans laquelle le câble est bloqué et ne peut plus facilement être déplacé à travers le passage.

Les moyens de verrouillage sont portés au moins en partie par la bague de serrage de manière à être activés lors du serrage de la bague de serrage. Les moyens de verrouillage ont au moins un cran anti-retour. Un tel cran anti-retour permet de bloquer le déplacement de la bague de serrage par rapport à la douille dans un sens ou une direction opposé(e) au déplacement de serrage de la bague par rapport à la douille. De tels moyens de verrouillage permettent d'éviter ainsi que la bague ne se desserre, même lorsque le dispositif de fixation est soumis à de fortes vibrations et ceci pendant de longues périodes (ce qui ne serait pas forcément le cas avec un dispositif à vis).

Le déplacement de la bague de serrage par rapport à la douille s'effectue dans un premier temps par translation pour venir serrer la douille sur le câble, puis dans un deuxième temps par rotation, pour verrouiller la bague de serrage sur la douille. Ceci présente une meilleure ergonomie par rapport à une rotation de la bague sur un filetage de la douille. En effet, dans le cas d'un filetage, plusieurs tours en rotation de la bague seraient nécessaires pour obtenir la translation suffisante au déplacement de la douille sur le câble. Un tel vissage de la bague sur la douille peut s'avérer fastidieux et peut être rendu difficile lorsque le dispositif de fixation se trouve dans un environnement encombré ou confiné.

Ainsi, pour réaliser un déplacement de la bague sur la douille en translation parallèlement à l'axe longitudinal du câble, il est possible d'appuyer sur la bague de serrage parallèlement à cet axe. Ceci peut être effectué relativement facilement même lorsque les abords circulaires autour de la bague de serrage sont encombrés. De même, pour réaliser un serrage de la bague sur la douille par rotation, il est possible d'effectuer une rotation de la bague de serrage sur moins d'un tour. Ceci permet de fournir des dispositifs de serrage de câble particulièrement ergonomiques.

D'autres caractéristiques de l'invention font l'objet de revendications et apparaîtront à la lecture de la description détaillée qui suit, ainsi que sur les dessins annexés. Sur ces dessins :
- la figure 1 représente schématiquement en perspective un mode de réalisation d'un dispositif de serrage conforme à l'invention ;
- les figures 2A à 2G représentent de manière similaire à la figure 1, différentes étapes du montage et du serrage du dispositif de la figure 1 ;
- les figures 3A à 3D représentent schématiquement en coupe axiale, respectivement les étapes d'insertion et de serrage de la bague de serrage sur la douille du dispositif de la figure 1 ;
- les figures 4A et 4B représentent de manière détaillée, schématiquement et en perspective et partiellement en coupe, le serrage de la bague de serrage sur la douille du dispositif de serrage de la figure 1 ;
- la figure 5 représente schématique l'articulation d'une portion de douille mobile d'un dispositif ou d'un connecteur conforme à l'invention ; et
- la figure 6 représente schématiquement en perspective un connecteur électrique conforme à l'invention.

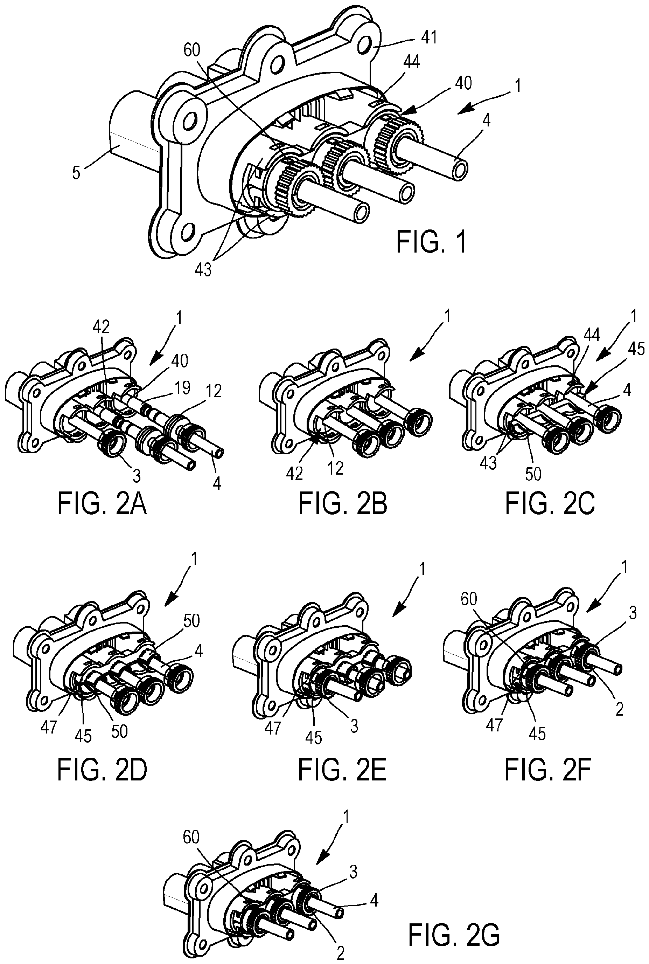

Le dispositif de serrage 1 de câble représenté sur les figures 1, 2A à 2G, 3A à 3D, 4A et 4B est un dispositif pour un boîtier 5 de contacts électriques, destiné à être monté sur la carcasse d'un dispositif électrique de puissance, tel qu'un convertisseur. Simultanément au montage du support 5 sur le dispositif de puissance, les contacts 19 (ici des contacts males) sont connectés à des contacts femelles montés par exemple sur un circuit électrique à bus bars.

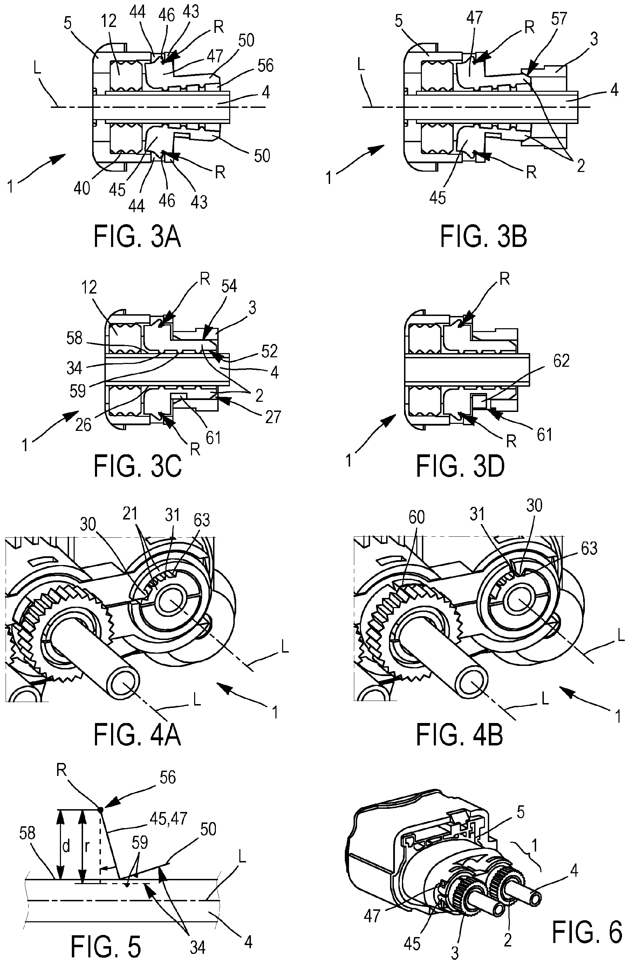

Dans l'exemple illustré, le dispositif de serrage comporte un boitier 5 à l'intérieur duquel sont ménagées trois cavités 40 (voir aussi figure 3A à 3D). Le boitier 5 est au moins partiellement entouré d'une plaque métallique 41 de blindage adaptée pour réaliser une continuité de blindage entre une tresse (non représentée) entourant les câbles 4 et la carcasse d'un dispositif électrique de puissance (également non représentée). La tresse est maintenue sur la plaque métallique 41 de blindage grâce à un collier (non représenté). Le boîtier 5 et la plaque métallique 41 de blindage peuvent être montés vissés sur la carcasse du dispositif électrique de puissance.

Comme illustré sur la figure 2A, chaque cavité 40 accommode un contact 19 et un joint unitaire filaire 12. Avant sertissage de chaque contact 19 sur un câble 4, une bague de serrage 3 et un joint 12 sont enfilés sur ce câble 4. Chaque contact 19 est ensuite mis en place dans une cavité 40, puis chaque joint 12 est poussé dans une gorge 42 située à l'arrière de chaque cavité 40 (voir figure 2B). Chaque cavité 40 est également prolongée à l'arrière par deux portions de bride 43. Chaque portion de bride 43 s'étend circulairement autour de chaque câble 4 sur sensiblement un quart de cercle. Chaque portion de bride 43 comporte une ouverture 44.

Comme illustré sur les figures 2C et 2D, un flasque inférieur 45, réunissant trois demi-douilles 50 en une pièce unique, est placé à l'arrière des trois cavités 40. Ce flasque inférieur 45 est placé sous les câbles 4 et est retenu sur les trois portions de bride 43 inférieures au moins en partie grâce à trois ergots 46 chacun respectivement inséré dans une ouverture 44 (voir également figure 3A). De manière analogue, un flasque supérieur 47, semblable au flasque inférieur 45, est placé symétriquement au-dessus des câbles 4 par rapport au flasque inférieur 45 et est retenu sur les trois portions de bride 43 supérieures au moins en partie grâce à trois ergots 46 chacun respectivement inséré dans une ouverture 44 (figures 2D et 3A). Les flasques inférieur 45 et supérieur 47 sont donc articulés autour de points de rotation R situés sensiblement au niveau des ergots 46 insérés dans les ouvertures 44. Autrement dit, les flasques inférieur 45 et supérieur 47 sont articulés chacun respectivement autour d'un axe de rotation, passant par trois de ces points de rotation R et sont symétriques l'un de l'autre par rapport à un plan passant sensiblement par les axes longitudinaux des câbles 4.

Une fois en place, chaque paire de demi-douilles 50 s'ouvre comme une mâchoire. Dans cette position des demi-douilles 50, les câbles 4 ne sont pas encore bloqués et peuvent être déplacés à travers le passage ménagé entre elles (voir figures 2D et 3A).

Chaque élément constitué d'un flasque 45, 47 et des trois demi-douilles 50 portées par celui-ci, présente une forme de L en coupe perpendiculaire (plan des figures 3A à 3D) à leur axe de rotation et passant par les points de rotation R. L'une des branches de ce L correspondant à une demi-douille 50 et l'autre de ces branches correspondant à un flasque 45 ou 47 reliant les trois demi-douilles 50 entre elles. Les ergots 46 sont situés au sommet de l'extrémité libre de la branche du flasque 45, 47 (Voir en particulier les figures 3A à 3D).

Lorsque les demi-douilles 50 sont ramenées l'une vers l'autre, les flasques 45, 47 respectifs s'alignent (figures 2E à 2G, 3C et 3G). L'un des avantages d'avoir un élément unique constitué d'un flasque 45, 47 et de plusieurs portions de douilles (ici trois demi-douilles 50), commun à plusieurs câbles 4 (et éventuellement identique de part et d'autre des câbles 4) réside dans le fait que cela réduit le nombre de pièces à fabriquer, manipuler et monter.

Chaque portion de douille (ici une demi-douille 50) comporte une surface interne 34 correspondant à une portion de cylindre (ici sensiblement hémicylindrique). Le rapprochement des portions de douille l'une vers l'autre permet de former une douille 2 complète sous forme d'un manchon creux, un autour de chaque câble 4, avec une paroi interne 52 essentiellement cylindrique assurant le serrage d'un câble 4, et une paroi externe 54 également essentiellement cylindrique sur laquelle vient se placer une bague de serrage 3. Selon des variantes, les portions de douille pourraient correspondre à des portions moins grandes d'un cylindre et des fentes longitudinales pourraient être ménagées, dans la douille complète, entre les portions de douille. Autrement dit, les portions de douilles ne sont pas nécessairement jointives dans la douille complète. La douille 2 et la bague de serrage 3 comprennent chacune une ouverture 26, 27 pour le passage d'un câble 4. Chaque bague de serrage 3 peut alors être insérée sur une douille (voir figures 2E, 2F, 3B et 3C).

Chaque bague de serrage 3 et chaque demi-douille 50 comportent des surfaces biseautées 57, coulissant l'une sur l'autre pour faciliter l'insertion de chaque bague de serrage 3 sur une douille 2. Lorsqu'une bague de serrage 3 est manipulée en translation longitudinalement le long d'une douille 2, vers un joint 12, elle est déplacée, par rapport à la douille 2, d'une position dans laquelle le câble 4 peut être déplacé vers une position dans laquelle le câble 4 est bloqué. Simultanément, les demi-douilles 50 et les flasques 45, 47 pivotent autour de l'axe de rotation, pour se rapprocher l'un de l'autre.

Lorsqu'une bague de serrage 3 est en butée sur les flasques inférieur 45 et supérieur 47, la douille 2 sur laquelle elle est montée est complètement serrée sur le câble 4 et celui-ci est bloqué (voir figures 2F, 3C).

Comme représenté schématiquement sur la figure 5, pour que le câble 4 puisse être bloqué lors de la rotation des flasques inférieur 45 et supérieur 47 autour de leur axe de rotation, il faut qu'au moins une portion de la surface interne 34 soit distante de l'axe de rotation d'un rayon r supérieur à la distance d entre l'axe de rotation et la surface externe 58 du câble 4. Pour augmenter l'efficacité du blocage, la surface interne des manchons comporte des nervures 59 dont le diamètre interne, une fois les flasques inférieur 45 et supérieur 47 rapprochés l'un de l'autre, est inférieur au diamètre externe de la gaine isolante du câble 4.

Afin de s'assurer que chaque bague de serrage 3 ne s'échappera pas de la douille 2 sur laquelle elle est montée, chaque bague de serrage 3 est retenue en rotation sur une douille 2 par des moyens de verrouillage. Ces moyens de verrouillage comprennent des rampes 21 sur chaque douille 2 et sur chaque bague de serrage 3 (voir figures. 4A et 4B), sont agencées de manière circulaire autour de l'axe longitudinal L des câbles 4.

En opérant une rotation d'une bague de serrage 3 par rapport à une douille 2 de sensiblement moins d'un quart de tour (voir déplacement des repères visuels 60 entre leur position déverrouillée sur la figure 2F et leur position verrouillée sur les figures 1 et 2G), celle-ci est verrouillée sur cette douille 2.

Comme on peut le voir sur la figure 4A, la bague de serrage 3 est maintenue en position déverrouillée (ou pré-verrouillée) grâce à une dent 30 qui coopère avec une encoche 29 précédant une série de dents 31 située sur une rampe 21 et faisant saillie sur la surface interne de la bague de serrage 3. Comme représenté sur les figures 3C et 3D, chaque douille 2 comporte une portion de gorge circulaire 61 adaptée pour recevoir un pion 62 faisant saillie sur le surface interne de la bague de serrage. En position déverrouillée de la bague de serrage 3, le pion 62 n'est pas engagé dans la portion de gorge circulaire 61, la bague de serrage 3 peut donc être retirée de la douille 2.

Sur les figures 3D et 4B, après rotation d'environ un quart de tour de la bague de serrage 3, la bague de serrage 3 est maintenue en position verrouillée. Le pion 62 est maintenant engagé dans la portion de gorge circulaire 61 et la bague de serrage 3 ne peut donc plus être retirée de la douille 2. La dent 30 a glissé sur la série de dent 31, pour se loger dans une encoche 63. Les dents 30, 31 constituent des moyens de verrouillage avec des crans anti-retour. Le repère visuel 60 est maintenant situé en face d'une ouverture 44.

La figure 5 représente un autre mode de réalisation de l'invention. Il s'agit d'un connecteur électrique. Il comporte un boîtier 5 et deux contacts, chacun serti sur un câble 4. Un dispositif de fixation 1 tel que celui décrit ci-dessus, mais avec deux douilles 2 et 2 bagues de serrage 3, au lieu de trois) est venu de matière (par exemple par moulage) avec le boîtier 5 pour limiter la propogation de vibrations du câble 4 vers les contacts.

## Revendications

1. Connecteur électrique comportant un boîtier (5) et un dispositif de serrage de câble comprenant
- une douille (2),
- une bague de serrage (3) et
dans lequel la douille (2) et la bague de serrage (3) comprennent chacune une ouverture (26, 27) pour le passage d'un câble (4) s'étendant selon un axe longitudinal sensiblement perpendiculairement à travers ces ouvertures (26, 27),
dans lequel au moins l'un des éléments parmi la douille (2) et la bague de serrage (3) comporte une surface interne (34) destinée à venir presser une surface externe du câble (4) pour bloquer celui-ci, lorsque la bague de serrage (3) est manipulée pour être déplacée, par rapport à la douille (2), d'une position dans laquelle le câble (4) peut être déplacé vers une position dans laquelle le câble (4) est bloqué, dans lequel il comporte en outre des moyens de verrouillage (21) portés au moins en partie par la bague de serrage (3) ayant au moins un cran anti-retour (30, 31), dans lequel au moins un flasque (45 ou 47) est articulé autour d'un axe de rotation et la portion de douille (50) mobile comporte une surface interne (34) en contact avec le câble (4) qui, quand elle est en position serrée sur le câble (4) est distante de l'axe de rotation d'un rayon (r) supérieur à la distance (d) entre l'axe de rotation et la surface externe (58) du câble (4),
**caractérisé par le fait que** la douille (2) est articulée sur une bride (43) du boîtier (5) et est mobile entre une position desserrée de la douille (2), dans laquelle le câble (4) peut être déplacé, et une position serrée, dans laquelle la douille (2) est maintenue serrée sur le câble (4) par la bague de serrage (3), dans lequel la douille (2) est montée de manière amovible sur une bride (43) du boîtier (5), dans lequel le bride (43) comporte une ouverture (44), dans lequel la douille (2) comporte au moins une portion de douille (50), portée au moins en partie par la flasque (45 ou 47) muni d'au moins un ergot (46) inséré dans la ouverture (44) qui retient au moins en partie chaque flasque (45, 47) sur une portion de bride (43).

2. Connecteur selon la revendication 1, dans lequel la bague de serrage (3) et la douille (2) comportent des surfaces biseautées (57), coulissant l'une sur l'autre lorsque la bague de serrage (3) est manipulée pour être déplacée, par rapport à la douille (2), d'une position dans laquelle le câble (4) peut être déplacé vers une position dans laquelle le câble (4) est bloqué, et pour faire pivoter l'ensemble du flasque (45 ou 47) et de la portion de douille (50) mobile autour de l'axe de rotation.

3. Connecteur selon l'une des revendications 1 à 2, dans lequel la douille (2) comporte deux portions de douille (50) mobile formant des demi-douilles, chacune portée par un flasque (45 ou 47) distinct et articulé autour d'un axe de rotation symétrique de l'autre par rapport à l'axe longitudinal (L) du passage du câble (4).

4. Connecteur selon l'une des revendications 1 à 3, dans lequel un flasque (45 ou 47) porte au moins deux portions de douille (50) mobile et est commun à au moins deux passages de câble (4).

5. Connecteur selon l'une des revendications précédentes, dans lequel les moyens de verrouillage (21) sont complémentaires et respectivement portés en partie sur la douille (2) et en partie sur la bague de serrage (3).

6. Connecteur selon la revendication 5, dans lequel les moyens de verrouillage comprennent au moins une dent (30 ou 31) portée par l'un des éléments parmi la bague de serrage (3) et la douille (2) et s'engageant chacune respectivement dans une encoche (63) portée par l'autre de ces éléments.

7. Connecteur selon l'une des revendications précédentes, dans lequel le déplacement de la bague serrage (3) par rapport à la douille (2) comporte une translation pour insérer la bague de serrage (3) sur la douille (2) et une rotation pour verrouiller la bague de serrage (3) sur la douille (2).

## Patentansprüche

1. Elektrischer Verbinder mit einem Gehäuse (5) und einer Kabelklemmvorrichtung, enthaltend
- eine Hülse (2),
- einen Klemmring (3),
wobei die Hülse (2) und der Klemmring (3) jeweils eine Öffnung (26, 27) zum Durchtritt eines Kabels (4) aufweisen, das sich entlang einer Längsachse im Wesentlichen senkrecht durch diese Öffnungen (26, 27) erstreckt,
wobei zumindest eines der Elemente aus Hülse (2) und Klemmring (3) eine Innenfläche (34) aufweist, die dazu bestimmt ist, eine Außenfläche des Kabels (4) anzudrücken, um dieses zu sichern, wenn der Klemmring (3) gehandhabt wird, um ihn bezüglich der Hülse (2) aus einer Position zu verlagern, in welcher das Kabel (4) in eine Position verlagert werden kann, in welcher das Kabel (4) gesichert ist, wobei er ferner Verriegelungsmittel (21) enthält, die zumindest teilweise von dem Klemmring (3) gehalten werden und zumindest eine Rücklaufsperrraste (30, 31) haben, wobei zumindest ein Kragenabschnitt (45 bzw. 47) um eine Drehachse angelenkt ist und der bewegliche Hülsenabschnitt (50) eine Innenfläche (34) in Kontakt mit dem Kabel (4) aufweist, die dann, wenn sie in mit dem Kabel (4) verspannter Position ist, von der Drehachse um einen Radius (r) entfernt ist, der größer als der Abstand (d) zwischen der Drehachse und der Außenfläche (58) des Kabels (4) ist,
**dadurch gekennzeichnet, dass** die Hülse (2) an einem Flanschteil (43) des Gehäuses (5) angelenkt ist und zwischen einer losen Position der Hülse (2), in welcher das Kabel (4) verlagert werden kann, und einer verspannten Position beweglich ist, in welcher die Hülse (2) über den Klemmring (3) am Kabel (4) verspannt gehalten ist, wobei die Hülse (2) an einem Flanschteil (43) des Gehäuses (5) abnehmbar gelagert ist, wobei das Flanschteil (43) eine Öffnung (44) enthält, wobei die Hülse (2) zumindest einen Hülsenabschnitt (50) enthält, der zumindest teilweise von dem Kragenabschnitt (45 bzw. 47) getragen wird, der mit zumindest einem Vorsprung (46) versehen ist, der in die Öffnung (44) eingefügt ist, die zumindest teilweise jeden Kragenabschnitt (45, 47) an einem Flanschteil (43) hält.

2. Verbinder nach Anspruch 1, wobei der Klemmring (3) und die Hülse (2) abgeschrägte Flächen (57) enthalten, die dann aneinander gleiten, wenn der Klemmring (3) gehandhabt wird, um ihn bezüglich der Hülse (2) aus einer Position zu verlagern, in welcher das Kabel (4) in eine Position verlagert werden kann, in welcher das Kabel (4) gesichert ist, um die aus Flanschteil (45 bzw. 47) und beweglichem Hülsenabschnitt (50) bestehende Einheit um die Drehachse zu verschwenken.

3. Verbinder nach einem der Ansprüche 1 bis 2, wobei die Hülse (2) zwei bewegliche Hülsenabschnitte (50) enthält, die Hülsenhälften bilden, wobei jede von einem separaten Kragenabschnitt (45 bzw. 47) getragen wird, der um eine Drehachse angelenkt ist, die bezüglich der Längsachse (L) des Durchtritts des Kabels (4) symmetrisch zur anderen Drehachse verläuft.

4. Verbinder nach einem der Ansprüche 1 bis 3, wobei ein Kragenabschnitt (45 bzw. 47) zumindest zwei bewegliche Hülsenabschnitte (50) trägt und zumindest zwei Durchtritten von Kabeln (4) gemein ist.

5. Verbinder nach einem der vorangehenden Ansprüche, wobei die Verriegelungsmittel (21) komplementär ausgeführt sind und jeweils teilweise an der Hülse (2) und teilweise an dem Klemmring (3) getragen werden.

6. Verbinder nach Anspruch 5, wobei die Verriegelungsmittel zumindest einen Zahn (30 bzw. 31) enthalten, der von einem der Elemente aus Klemmring (3) und Hülse (2) getragen wird und der jeweils in eine Einkerbung (63) eingreift, die von dem anderen dieser Elemente getragen wird.

7. Verbinder nach einem der vorangehenden Ansprüche, wobei die Verlagerung des Klemmrings (3) bezüglich der Hülse (2) eine translatorische Verschiebung umfasst, um den Klemmring (3) auf die Hülse (2) aufzuschieben, sowie eine Drehung, um den Klemmring (3) an der Hülse (3) zu verriegeln.

## Claims

1. An electrical connector having a casing (5) and a cable clamping device comprising
- a bush (2),
- a clamping ring (3) and
in which the bush (2) and the clamping ring (3) each comprise an opening (26, 27) for passing through a cable (4) extending along a longitudinal axis substantially perpendicularly through these openings (26, 27),
in which at least one of the elements from the bush (2) and the clamping ring (3) has an inner surface (34) intended to press against an outer surface of the cable (4) in order to block said cable, when the clamping ring (3) is manipulated so as to be displaced, relative to the bush (2), from a position in which the cable (4) can be displaced into a position in which the cable (4) is blocked, in which
said cable clamping device also comprises locking means (21) carried at least in part by the clamping ring (3) and having at least one non-return catch (30, 31), **characterized in that** the bush (2) is articulated to a flange (43) of the casing (5) and is movable between an unclamped position of the bush (2), in which the cable (4) can be displaced, and a clamped position, in which the bush (2) is held clamped on the cable (4) by the clamping ring (3),
in which the bush (2) is mounted on a collar (43) of the casing (5) so as to be removable.
in which the flange portion (43) comprises an opening (44) in which the bush (2) comprises at least one bush portion (50), carried at least in part by a plate (45 or 47) provided with at least one lug (46) inserted into the opening (44) which holds, at least in part, each plate (45, 47) on a flange portion (43),
in which at least one plate (45 or 47) is articulated about an axis of rotation and the movable bush portion (50) comprises an inner surface (34) in contact with the cable (4), which, when in a position clamped on the cable (4), is distanced from the axis of rotation by a radius (r) greater than the distance (d) between the axis of rotation and the outer surface (58) of the cable (4).

2. The connector as claimed in claim 1, in which the clamping ring (3) and the bush (2) have beveled surfaces (57), which slide over one another when the clamping ring (3) is manipulated so as to be displaced, with respect to the bush (2), from a position in which the cable (4) can be displaced into a position in which the cable (4) is blocked, and so as to pivot the assembly formed by the plate (45 or 47) and the movable bush portion (50) about the axis of rotation.

3. The connector as claimed in any one of claims 1 to 2, in which the bush (2) comprises two movable bush portions (50) forming half-bushes each carried by a separate plate (45 or 47) and articulated about axes of rotation symmetrical to one another with respect to the longitudinal axis (L) of the passage of the cable (4).

4. The connector as claimed in any one of claims 1 to 3, in which a plate (45 or 47) carries at least two movable bush portions (50) and is common to at least two passages for a cable (4).

5. The connector as claimed in any one of the preceding claims, in which the locking means (21) are complementary and are carried, respectively, in part on the bush (2) and in part on the clamping ring (3).

6. The connector as claimed in claim 5, wherein the locking means comprise at least one tooth (30 or 31) carried by one of the elements from the clamping ring (3) and the bush (2), each tooth engaging, respectively, in a notch (63) carried by the other of these elements.

7. The connector as claimed in any one of the preceding claims, wherein the displacement of the clamping ring (3) with respect to the bush (2) comprises a translation in order to insert the clamping ring (3) on the bush (2) and a rotation in order to lock the clamping ring (3) on the bush (2).
